# EUROPÄISCHE PATENTSCHRIFT

(11) **EP 0 338 640 B1**
(45) Veröffentlichungstag und Bekanntmachung des Hinweises auf die Patenterteilung: **15.03.1995**
(21) Anmeldenummer: 89200977.0
(22) Anmeldetag: 17.04.1989
(51) Int. Cl.: H04Q 3/00, H04M 3/36

(54) **Vermaschtes Fernmeldenetz**
Meshed telecommunication network
Réseau de télécommunication à mailles

(30) Priorität: 22.04.1988 DE 3813581
(43) Veröffentlichungstag der Anmeldung: 25.10.1989
(73) Patentinhaber: Philips Patentverwaltung GmbH, 22335 Hamburg (DE); Philips Electronics N.V., 5621 BA Eindhoven (NL)
(72) Erfinder: Bauer, Uwe, Dipl.-Ing., D-8501 Eckental (DE)
(74) Vertreter: Peuckert, Hermann, Dipl.-Ing.

(56) Entgegenhaltungen:
- EP-A- 0 196 141
- FR-A- 2 111 296
- US-A- 4 532 625
- IBM TECHNICAL DISCLOSURE BULLETIN, Band 30, Nr. 3, August 1987, Seite 1407, New York, US; "Method to remotely configure a network node from a local node"
- PROCEEDINGS OF THE NINTH DATA COMMUNICATIONS SYMPOSIUM, Whistler Mountain, British Columbia, 10th - 13th September 1985, pages 199-206; R.S. GILBERT etal.: "CNMGRAF - Graphic presentation services for network management"
- AT&T TECHNOLOGY, Band 2, Nr.3, 1987, Seiten 30-37; W.B. WHITTEN, II: "Advanced interfaces speed delivery of services"
- ERICSSON REVIEW, Band 62, Nr. 2, 1985, Seiten 82-92; BACKSTRÖM et al.: "Machine communication in AXE 10"
- IEEE GLOBAL TELECOMMUNICATIONS CONFERENCE, New Orleans, Louisiana, 2.-5.Dezember 1985, Band 3, Paper 40.3, Seiten 1229-1233; D.P. MACKE et al.: "Man machine interface for GTE's GTD-5 EAX"
- IEEE INTERNATIONAL CONFERENCE ON COMMUNICATIONS, Seattle, Washington, 7.-10.Juni 1987, Band 3, Paper 35 B.2, Seiten 1246-1250; R.I. GERMER et al.: "The racal-vodafone network information and control system"

## Beschreibung

Die Erfindung betrifft ein vermaschtes Fernmeldenetz, bei welchem der Verbindungsaufbau zwischen Vermittlungsstellen über Vorwärtsmeldungen eingeleitet wird.

Aus DE-OS 35 11 431 ist ein Wegeauswahlverfahren für ein vermaschtes Fernmeldenetz bekannt, bei welchem Vermittlungsstellen über Verbindungsleitungen miteinander verbunden sind. Der Verbindungsaufbau zwischen einem rufenden Teilnehmer, welcher an einer Vermittlungsstelle angeschlossen ist, und einem gerufenen Teilnehmer, welcher einer anderen Vermittlungsstelle zugeordnet ist, wird über Verbindungsaufbaumeldungen eingeleitet. Diese Verbindungsaufbaumeldungen werden ausgehend von der Vermittlungsstelle des rufenden Teilnehmers zu allen an diese Vermittlungsstelle angeschlossenen Vermittlungsstellen übertragen und dort gespeichert. In der Vermittlungsstelle des gerufenen Teilnehmers wird nur die zuerst eintreffende Verbindungsaufbaumeldung für die Herstellung einer Verbindung zur rufenden Teilnehmerstelle herangezogen. Auf diese Weise ist sichergestellt, daß bei einer beliebigen Netztopologie des vermaschten Fernmeldenetzes der gerufene Teilnehmer auf jeden Fall gefunden wird, solange mindestens ein Verbindungsweg zwischen rufendem und gerufenen Teilnehmer besteht. Die Verbindungsaufbaumeldungen breiten sich vom rufenden Teilnehmer zum gerufenen Teilnehmer wellenförmig in allen Richtungen aus. Aufgrund der Ausbreitungsrichtung von rufenden zum gerufenen Teilnehmer werden sie auch als Vorwärtsmeldungen bezeichnet. Der auf diese Weise gefundene Verbindungsweg wird mittels einer Rückwärtsmeldung, welche über den gefundenen Weg in Gegenrichtung von der Vermittlungsstelle des gerufenen Teilnehmers zur Vermittlungsstelle des rufenden Teilnehmers übertragen wird, abschnittsweise von Vermittlungsstelle zu Vermittlungsstelle ein Sprechkanal belegt und die Verbindung aufgebaut.

Durch den Umzug von Vermittlungsstellen oder den Ausfall von Verbindungsleitungen kann sich die Netztopologie eines vermaschten Fernmeldenetzes ändern. Informationen über die Netztopologie und über die Auslastungen der Verbindungsleitungen sowie sonstige Informationen eines solchen vermaschten Fernmeldenetzes werden im folgenden unter dem Begriff Netzinformationen zusammengefaßt. Auf der Grundlage dieser Netzinformationen trifft ein Netzkoordinator Entscheidungen über Ausbau und Änderungen sowie über die Art der einzusetzenden Vermittlungsstellen und Verbindungsleitungen und reagiert so auf die Erfordernisse des Fernmeldenetzes. Die Netzüberwachung wird dadurch erschwert, daß der Netzkoordinator zur Durchführung dieser Aufgaben seinen Aufenthaltsort häufig ändert.

Aus IBM Technical Disclosure Bulletin, Band 30, Nr. 3, August 1987., Seite 1407, New York, US; "Method to remotely configure a network node from a local node" ist ein Verfahren zur Fernüberwachung eines Netzes von einem beliebigen Netzwerkknoten aus bekannt. Hierzu wird von dem Knotenpunkt, von dem die Überwachung bzw. Fernsteuerung stattfinden soll, eine Kommunikationsverbindung zu dem zu überwachenden Netzwerkknoten aufgebaut. Nach Bedarf wird ein Profil des zu überwachenden Netzknotens über die bestehende Verbindung in den Speicher des Überwachenden Knoten kopiert. In einem entsprechenden Menü kann der Benutzer die Konfiguration des zu überwachenden Knotens ändern. Das geänderte Profil wird über die bestehende Verbindung zu dem überwachenden Knoten zurückkopiert. Diese Art der Fernüberwachung hat zwar den Vorteil, daß das gesamte Netzwerk von einer einzigen Station fernbedient werden kann, allerdings ist hierzu zu jedem zu überwachenden Knoten eine eigene Verbindung aufzubauen.

Aufgabe der vorliegenden Erfindung ist es, das vermaschte Fernmeldenetz der eingangs genannten Art so weiterzubilden, daß das Fernmeldenetz in einfacher Weise überwachbar ist und der Aufwand hierzu möglichst gering ist.

Diese Aufgabe wird dadurch gelöst, daß in den Vermittlungsstellen (V1, V2, ...) ein Anschlußmodul zum Sammeln statistischer Daten vorgesehen ist, wobei jedes Anschlußmodul bei Empfang einer speziellen Meldung "Netzabbild" die gesammelten Daten aussendet, und daß mindestens ein Netzüberwachungsplatz (N) vorgesehen ist, der mittels einer Schnittstelle an den Vermittlungsstellen anschließbar ist und der die Meldung "Netzabbild" als Vorwärtsmeldung erzeugt.

Vorteilhafte Ausgestaltungen der Erfindung sind Gegenstand der Unteransprüche.

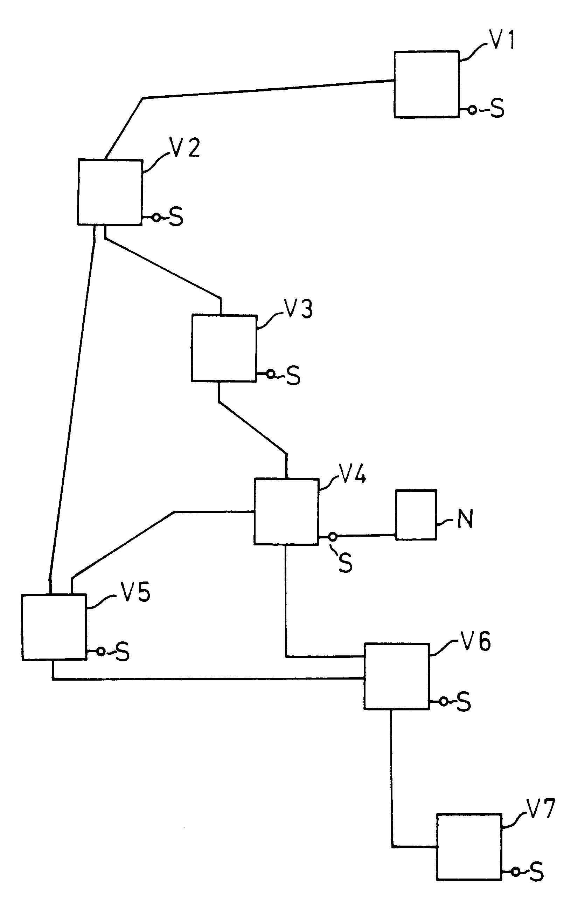

Ein Ausführungsbeispiel der Erfindung wird anhand der Zeichnung dargestellt und mit weiteren Einzelheiten beschrieben und erläutert.

Die einzige Figur zeigt in schematischer Darstellung ein vermaschtes Fernmeldenetz mit Vermittlungsstellen V1 bis V7, welche über Leitungsbündel 12, 23,...67 verbunden sind. Ein Leitungsbündel besteht aus mehreren Verbindungsleitungen. Eine Verbindungsleitung eines jeden Leitungsbündels wird als Signalisierungskanal bezeichnet und dient allein dem Informationsaustausch zwischen den an seinen beiden Leitungsenden angeschlossenen Vermittlungsstellen. Auf diesem Signalisierungskanal werden Meldungen ausgetauscht, welche beispielsweise zum Aufbau einer Gesprächsverbindung dienen. Je nach dem in der Meldung verwendeten Kennzeichen lösen diese Meldungen in der Vermittlungsstation, in der sie empfangen werden, unterschiedliche Reaktionen aus. Hierbei ist zunächst aufgrund der Ausbreitungsrichtung dieser Meldungen zwischen einer Vorwärtsmeldung und einer Rückwärtsmeldung zu unterscheiden. Eine Vorwärtsmeldung nimmt ihren Ausgang beim rufenden Teilnehmer und breitet sich quasi wellenförmig solange im ganzen Fernmeldenetz aus, bis der gerufene Teilnehmer gefunden ist. Auf diese Weise ist ein Verbindungsweg festgelegt, welcher sich nun anhand der in der Vorwärtsmeldung übermittelten Daten direkt zurückverfolgen läßt. Diese Rückverfolgung wird mit einer Rückwärtsmeldung durchgeführt. Bei einer Vorwärtsmeldung mit dem Kennzeichen "Verbindungsaufbau" wird in der anschließenden Rückwärtsmeldung "Verbindungsaufbau" gleichzeitig mit der im Signalisierungskanal zurücklaufenden Rückwärtsmeldung abschnittsweise von Vermittlungsstelle zu Vermittlungsstelle jeweils eine Verbindungsleitung der Bündelleitung als Gesprächs- beziehungsweise als Datenleitung belegt und diese Leitungen über in den Vermittlungen angeordnete Koppelfelder miteinander verbunden.

An jeder Vermittlungsstelle V1 bis V7 ist eine Schnittstelle S angeordnet. An diesen Schnittstellen S ist ein Netzüberwachungsplatz N anschließbar, mittels welchem ein Netzkoordinator von einer beliebigen Vermittlungsstelle des vermaschten Fernmeldenetzes aus die benötigten Netzinformationen einholen kann.

Im Ausführungsbeispiel besteht diese Schnittstelle aus einer seriellen Schnittstelle, welche innerhalb der Vermittlungsstelle mit einem Bedienermodul verbunden ist. An dieser seriellen Schnittstelle wird als Netzüberwachungsplatz ein handelsüblicher Personal-Computer angeschlossen, welcher mit einer entsprechenden Software versehen ist. Auf diese Weise reduziert sich die Herstellung eines Netzüberwachungsplatzes auf die Erstellung der Software, was entsprechende Kosten für Hardwareentwicklung einspart.

Sobald der Netzüberwachungsplatz über die Schnittstelle mit dem Bedienermodul verbunden ist, veranlaßt das Bedienermodul die Eintragung des Netzüberwachungsplatzes in eine in der Vermittlungsstelle geführte Liste, dem sogenannten Teilnehmerprofil. In diesem Teilnehmerprofil sind alle der Vermittlungsstelle zugeordneten Teilnehmer mit ihren Rufnummern und den diesen Teilnehmern zugeordneten Prioritäten enthalten. Auf diese Weise wird der Netzüberwachungsplatz wie ein sonstiger Teilnehmer der Vermittlungsstelle geführt und ist auf diese Weise anhand seiner Rufnummer von jeder Stelle des Fernmeldenetzes erreichbar.

Jede Vermittlungsstelle enthält ein Anschlußmodul, in welchem statistische Daten gesammelt werden. Diese statistischen Daten bestehen beispielsweise aus der Verkehrsbelastung der einzelnen, an dieser Vermittlungsstelle angeschlossenen Bündelleitungen und Teilnehmern und den Betriebsdaten der Vermittlung.

Die Verkehrsbelastung einer Vermittlungsstelle enthält beispielsweise die Anzahl der gesamten Belegungen geordnet nach Internverkehr - das heißt Verbindungen zwischen Teilnehmern der gleichen Vermittlungsstelle - und nach Externverkehr - das heißt Verbindungen zwischen Teilnehmern verschiedener Vermittlungsstellen -, sowie die Anzahl der momentanen Belegung dieser Vermittlungsstelle geordnet nach Fernsprech- und Datenteilnehmern.

Die Betriebsdaten der Vermittlung umfassen beispielsweise eine Knotennummer, das Teilnehmerprofil dieser Vermittlungsstelle und ein Bündelprofil dieser Vermittlungsstelle. Jede Vermittlungsstelle hat eine eigene Knotennummer, welche sich von den Knotennummern der anderen Vermittlungsstellen unterscheidet. Diese Knotennummer dient, ähnlich der Rufnummer eines Teilnehmers, zur Identifizierung einer Vermittlungsstelle. In dem Bündelprofil sind alle Daten über jede der an der Vermittlungsstelle angeschlossenen Bündelleitungen enthalten. Diese Daten setzen sich beispielsweise aus dem Leitungsstatus (frei, belegt, gestört) und der Knotennummer der am anderen Ende der Bündelleitung angeschlossenen Vermittlungsstelle zusammen.

Die Verkehrsbelastung einer an der Vermittlungsstelle angeschlossenen Leitung enthält beispielsweise Angaben über die momentane Anzahl der Belegungen für Teilnehmer, getrennt nach Fernsprech- und Datenteilnehmern, die Anzahl der gesamten Belegungen, die Anzahl der Blockierungen und die Anzahl der Vorrangstufentrennungen jeweils seit Inbetriebnahme der Vermittlungsstelle.

Jedes Anschlußmodul kann aufgrund einer speziellen Rufnummer wie ein anderer Teilnehmer rufen und gerufen werden. In Verbindung mit der gleichen Eigenschaft eines am Bedienermodul angeschlossenen Netzüberwachungsplatzes bietet dies den Vorteil, daß zur Datenübermittlung von Netzinformationen und sonstigen Daten zwischen Netzüberwachungsplatz und einzelnen Anschlußmodulen oder in der umgekehrten Richtung Vorwärtsmeldungen und Rückwärtsmeldungen benutzt werden können. Auf diese Weise können die bereits zum Gesprächsaufbau vorhandenen Einrichtungen vermaschter Fernmeldenetze, insbesondere die Signalisierungskanäle, benutzt werden.

Mit dem Anschluß des Netzüberwachungsplatzes an das Bedienermodul verschafft sich der Netzüberwachungsplatz zunächst ein Netzabbild der Netztopologie. Hierzu sendet er eine Vorwärtsmeldung mit dem Kennzeichen "Netzabbild" aus. Diese Vorwärtsmeldung wird an alle an der Vermittlungsstelle V4 über Leitungen angeschlossene Vermittlungsstellen V3, V5, V6 gesandt. Aufgrund des Kennzeichens "Netzabbild" wird das in jeder dieser Vermittlungsstellen angeordnete Anschlußmodul angesteuert. Jede dieser Vermittlungsstellen schickt nun ihrerseits neue Vorwärtsmeldungen "Netzabbild" an alle anderen an ihr angeschlossenen Vermittlungen, außer an die Vermittlung, von der die betreffende Vorwärtsmeldung zu ihr gelangt ist. Auf diese Weise erhält die Vermittlungsstelle V2 die Vorwärtsmeldung sowohl von der Vermittlungsstelle V3 als auch von der Vermittlungsstelle V5. Sie wählt dabei diejenige Vorwärtsmeldung aus, welche zuerst bei ihr antrifft, während alle weiteren Vorwärtsmeldungen von ihr ignoriert werden. Auf diese Weise ignoriert die Vermittlungsstelle V5 die Vorwärtsmeldung, welche von der Vermittlungsstelle V6 gesandt wird. Auf diese Weise werden nach und nach alle Vermittlungsstellen, zu welchen auch nur ein Verbindungsweg existiert, erreicht. Jede Vorwärtsmeldung enthält zugleich die Knotennummer der Vermittlung, von der sie abgesandt wurde. Aufgrund der Vorwärtsmeldung "Netzabbild" schickt jedes Anschlußmodul in einer Rückwärtsmeldung die zur Abbildung der Netztopologie benötigten Daten an die in der Vorwärtsmeldung mit der Knotennummer bezeichnete Vermittlungsstelle zurück. Auf diese Weise werden die Daten von Vermittlungsstelle zu Vermittlungsstelle weitergegeben, bis sie den Netzüberwachungsplatz erreichen. Die für ein Netzabbild benötigten Daten setzen sich aus der in jeder Vermittlungsstelle verwendeten Numerierung der Bündelleitungen, des Leitungsstatusses und der an Knotennummern der an diesen Bündelleitungen angeschlossenen Vermittlungen zusammen. Diese Daten sind im Ausführungsbeispiel so zusammengefaßt, daß sie in der Rückwärtsmeldung mit aufnehmbar sind. Aus diesem Grund wird zum Übermitteln dieser Daten im Gegensatz zu einer Gesprächsverbindung keine zusätzliche Leitung benötigt. Dies hat den Vorteil, daß die Kapazität der Bündelleitungen während der Durchführung eines Netzabbildes nicht eingeschränkt wird.

Alle im Netzüberwachungsplatz ankommenden Daten werden vom Netzüberwachungsplatz verarbeitet und sind als Grafik anzeigbar. Mit diesen Daten hat der Netzkoordinator die gesamten aktuellen Netzinformationen verfügbar.

Um die Aktualität des Netzabbildes sicherzustellen, ist im Ausführungsbeispiel bei Änderungen der Netztopologie etc. eine fortlaufende Korrektur des Netzabbildes vorgesehen. Hierzu überwacht das in jeder Vermittlungsstelle angeordnete Anschlußmodul die an ihn angeschlossenen Leitungsbündel. Ein Ausfall eines Leitungsbündels kann beispielsweise durch einen Taktausfall des Leitungsbündels festgestellt werden. Hierzu wird ein Taktausfallsignal einer Taktrückgewinnungseinheit, welche jedem Leitungsbündel zugeordnet ist, herangezogen. Einem Netzausfall gleichbedeutend ist die Überschreitung der Bündelgrundauslastung. Diese Veränderungen im Netz werden von der Vermittlungsstelle des betreffenden Anschlußmoduls in einer Vorwärtsmeldung "Netzausfall" an den Netzüberwachungsplatz ausgesandt. Der Einsatz einer Vorwärtsmeldung ist besonders vorteilhaft, da die Meldung über den Netzausfall auf jeden Fall bei dem Netzüberwachungsplatz ankommt, wenn auch nur eine einzige ungestörte Verbindung zwischen der betreffenden Vermittlungsstelle und dem Netzüberwachungsplatz besteht. Bei einer Rückwärtsmeldung wäre indessen eine ungestörte Übermittlung dieser Daten über den zuletzt bekannten Verbindungsweg nicht unter allen Umständen gewährleistet. Damit ist sichergestellt, daß Netzausfallmeldungen jeden im Netz angeschlossenen Netzüberwachungsplatz so weit als möglich erreichen und daß das Netzabbild hierdurch laufend aktualisiert wird.

Im Ausführungsbeispiel ist das Bedienermodul so ausgestaltet, daß mit Hilfe des Bedienermoduls Systemdaten der Vermittlungsstelle geändert werden können. Die Systemdaten einer Vermittlungsstelle setzen sich aus dem Teilnehmerprofil und dem Bündelprofil zusammen. Das Teilnehmerprofil muß beispielsweise zur Anmeldung eines neu angeschlossenen Teilnehmers bzw. zur Abmeldung eines abzutrennenden Teilnehmers oder zur Änderung der Prioritäten angeschlossener Teilnehmer usw. geändert werden. Hierfür ist an jeder Vermittlungsstelle eine Benutzerschnittstelle mit Ein- und Ausgabeeinheiten vorgesehen, über welche das berechtigte Bedienerpersonal einer jeden Vermittlungsstelle, die diese Vermittlungsstelle jeweils betreffenden Änderungen vornehmen kann. Mit einem als Fernladen bezeichneten Betriebsmodus ist es nun möglich, über den Netzüberwachungsplatz jedes einzelne Bedienermodul des Fernmeldenetzes anzusprechen. Hierzu wird die Verbindung zwischen Netzüberwachungsplatz und Bedienermodul wie zwischen zwei Teilnehmern hergestellt. Dies geschieht zunächst durch eine Vorwärtsmeldung "Fernladen" des Netzüberwachungsplatzes, welche die Rufnummer des betreffenden Bedienermoduls enthält. Ist das betreffende Bedienermodul gefunden, so wird über eine Rückmeldung "Fernladen" eine Datenleitung zwischen dem betreffenden Bedienermodul und dem Netzüberwachungsplatz geschaltet. Über diese Datenleitung kann der Netzkoordinator dann Änderungen der Systemdaten der betreffenden Vermittlungsstelle vornehmen, als würde er direkt an der Benutzerschnittstelle des jeweiligen Bedienermoduls sitzen. Die Betriebsart "Fernladen" bietet den Vorteil, daß als Fernsteuerleitung eine beliebige Leitung des Fernmeldenetzes benutzt werden kann und auf diese Weise keine speziellen Leitungen ausschließlich als Fernsteuerleitungen benötigt werden. Auf diese Weise ist eine bessere Ausnutzung der im Fernmeldenetz vorhandenen Verbindungsleitungen gegeben.

## Patentansprüche

1. Vermaschtes Fernmeldenetz, bei welchem der Verbindungsaufbau zwischen Vermittlungsstellen (V1, V2, ...) über Vorwärtsmeldungen eingeleitet wird,
dadurch gekennzeichnet,
daß in den Vermittlungsstellen (V1, V2, ...) ein Anschlußmodul zum Sammeln statistischer Daten vorgesehen ist, wobei jedes Anschlußmodul bei Empfang einer speziellen Meldung ("Netzabbild") die gesammelten Daten aussendet, und daß mindestens ein Netzüberwachungsplatz (N) vorgesehen ist, der mittels einer Schnittstelle an den Vermittlungsstellen anschließbar ist und der die Meldung "Netzabbild" als Vorwärtsmeldung erzeugt.

2. Vermaschtes Fernmeldenetz nach Anspruch 1,
dadurch gekennzeichnet,
daß jedem Anschlußmodul eine eigene Rufnummer zugeordnet ist.

3. Vermaschtes Fernmeldenetz nach Anspruch 1 oder 2,
dadurch gekennzeichnet,
daß der Netzüberwachungsplatz (N) so ausgestaltet ist, daß mit Anschluß des Netzüberwachungsplatzes (N) an die Schnittstelle (S) die Vorwärtsmeldung "Netzabbild" erzeugt wird.

## Claims

1. A meshed telecommunication network, in which the setting up of connections between exchanges (V1, V2, ...) is initiated by forward messages, characterized in that the exchanges (V1, V2, ...) are provided with a connecting module for collecting statistical data, each connecting module transmitting the collected data upon reception of a special message "network picture", and that there is provided at least one network monitoring position (N) which can be connected to the exchanges via an interface and which generates the message "network picture" as a forward message.

2. A meshed telecommunication network as claimed in Claim 1, characterized in that a respective calling number is assigned to each connecting module.

3. A meshed telecommunication network as claimed in Claim 1 or 2, characterized in that the network monitoring position (N) is conceived so that the forward message "network picture" is generated when the network monitoring position (N) is connected to the interface (S).

## Revendications

1. Réseau de télécommunications maillé, dans lequel l'établissement d'une communication entre des centres de commutation (V1, V2, ...), est amorcé via des messages de signalisation vers l'avant, caractérisé en ce que dans les centres de commutation (V1, V2, ...) est prévu un module de lignes pour rassembler des données statistiques, chaque module de lignes émettant, à la réception d'un message de signalisation particulier ("image de réseau") les données rassemblées, et en ce qu'au moins un point de contrôle de réseau (N) est prévu, ce point pouvant être raccordé à l'aide d'une interface aux centres de commutation et produisant le message de signalisation "image de réseau" en tant que message de signalisation vers l'avant.

2. Réseau de télécommunications maillé selon la revendication 1, caractérisé en ce qu'un numéro d'appel propre est affecté à chaque module de lignes.

3. Réseau de télécommunications maillé selon la revendication 1 ou 2, caractérisé en ce que le point de contrôle de réseau (N) est agencé de telle façon que le message de signalisation vers l'avant "image de réseau" soit produit par connexion du point de contrôle de réseau (N) avec l'interface (S).
